# EUROPEAN PATENT SPECIFICATION

(11) **EP 1 433 383 B1**
(45) Date of publication and mention of the grant of the patent: **26.11.2008**
(21) Application number: 03079165.1
(22) Date of filing: 23.12.2003
(51) Int. Cl.: A21D 2/18, A21D 13/04, A21D 13/06

(54) **Natural flour mixture and bakery products obtained therefrom**
Natürliche Mehlmischung und daraus erhaltene Backwaren
Mélange de farine naturelle et produits de boulangerie ainsi obtenus

(30) Priority: 23.12.2002 NL 1022254
(43) Date of publication of application: 30.06.2004
(73) Proprietor: Thomas Uljee Beheer B.V., 3076 JV Rotterdam (NL)
(72) Inventor: Uljee, Antonius Hubertus, 3281 HA Numansdorp (NL)
(74) Representative: van Westenbrugge, Andries

(56) References cited:
- DE-U- 29 813 793
- FR-A- 2 765 076
- US-A- 4 451 491
- FREY W.R.: "The colouring magic of caramel" FOOD PRODUCT DEVELOPMENT., vol. 3, no. 6, 1969, pages 22-23, XP008020162 MAGAZINES FOR INDUSTRY, NEW YORK,, US ISSN: 0015-654X
- DATABASE WPI Section Ch, Week 200048 Derwent Publications Ltd., London, GB; Class D11, AN 2000-530897 XP002249226 & RU 2 143 808 C (SHATNYUK L N) 10 January 2000 (2000-01-10)
- NORTH R.: "Add a pinch of burnt sugar for colour" CANNER PACKER, vol. 138, no. 5, 1969, pages 22-23, XP008020165 TRIAD PUB., LOUISVILLE, KY,, US ISSN: 0008-557X
- OZBOY O.: "Development of corn starch-gum bread for phenylketonuria" DIE NAHRUNG., vol. 46, no. 2, 2002, pages 87-91, XP008020164 VCH VERLAGSGESELLSCHAFT, WEINHEIM., XX ISSN: 0027-769X
- DATABASE WPI Section Ch, Week 200236 Derwent Publications Ltd., London, GB; Class D11, AN 2002-324324 XP002249227 -& JP 2002 069481 A (KANEKA CORP) 8 March 2002 (2002-03-08)
- ACS E. ET AL.: "Bread from corn starch for dietetic purposes. I. Structure formation" CEREAL RESEARCH COMMUNICATIONS, vol. 24, no. 4, 1996, pages 441-449, XP008020161 SZEGEL, HU ISSN: 0133-3720
- DATABASE WPI Section Ch, Week 199348, Derwent Publications Ltd., London, GB; Class D13, AN 1993-379721, XP002061427 & HU 63 739 A2 (GABONATERMESZTESI KI) 28 October 1993
- PULZ O. ET AL.: "Gedanken zu Möglichkeiten des Einsatzes von hydrokolloiden in der Backwarenindustrie" BAECKER UND KONDITOR, vol. 27, no. 11, 1979, page 339, XP008020168 FACHBUCHVERLAG, LEIPZIG, DE ISSN: 0005-383X

## Description

The invention relates to a natural flour mixture that is completely free from wheat, gluten, cow's milk, soya, peanut and chicken egg constituents.

Food hypersensitivity is a collective term for hypersensitive reactions to food, such as food allergy and food intolerance. Approximately 1 % of Dutch nationals suffer from food allergy and/or food intolerance. In the case of babies this varies between approximately 2 and 6 %. It is estimated that approximately 85 % of allergic symptoms in babies and toddlers are related to food.

In the case of food allergy the body's defence system produces antibodies against, for example, certain proteins or protein derivatives in the food, such as cow's milk protein or peanut proteins. If these antibodies come into contact with the proteins against which they have been produced, someone with a food allergy then becomes ill. In the case of food intolerance certain constituents in the food cause someone to become ill, but in this case the body's defence system is not involved.

If someone is suffering from food allergy and/or food intolerance various symptoms can manifest themselves via, inter alia, the gastrointestinal tract, the respiratory tracts and the skin and symptoms in the joints can also arise. A severe reaction that can arise as a result of hypersensitivity to food is anaphylactic shock. This is a life-threatening reaction where a wide variety of symptoms arise at the same time and the blood pressure falls substantially. As a result a person can even go into shock.

Some foodstuffs are found to be the cause of food allergy or intolerance more frequently than other foods. Examples of these are cow's milk, chicken eggs, fish, soya, peanuts, nuts, fruit and gluten, wheat, seeds and pips, lactose, sauerkraut, preservatives (inter alia sulphite and nitrate), colouring agents (for example tartrazine) and flavour enhancers (for example vetsin).

For adults and children (and their parents) who suffer from hypersensitivity to food this is often a major problem. There is therefore substantial interest from this group for products that do not give rise to food hypersensitivity reactions.

With regard to bakery products, it is important in this context to find a substitute for gluten. Specifically, gluten gives the open texture to bread. There are various gluten-free products, including flour, on the market. Recipes for making bakery products without gluten are also available, for example via the Internet. A number of patents or patent applications are also dedicated to this problem.

For instance, WO 0119195, for example, describes a method for making a gluten substitute, where use is made of a starch, a fat, a protein and a fluid. The starch can be, for example, potato starch, but also Codex Alimentarius wheat starch. Such starch may contain up to 200 ppm gluten and is thus not completely free from gluten. Bakery products that are obtained in this way are often termed 'substantially free from gluten'. The fats used according to the method of WO 0119195 are animal or vegetable fats, including, for example, soya bean oil, or fats from milk or butter. Proteins are obtained from, for example, eggs, milk, cheese or nuts. Not only can this gluten replacement still contain gluten, but this gluten replacement also contains products that are able to cause hypersensitivity to food. These problems apply to many products on the market.

FR 2765075 describes a bread without gluten and a procedure to make such bread. A composition for preparing gluten-free bread comprising potato starch and/or rice flour, a thickener as substitute for gluten, an emulsifier, fat, baker's yeast (saccharomyces cerevisiae), sugar and salt is used. W.R. Frey describes in "The colouring magic of caramel", Food product development, vol. 3, no. 6, 1969, pages 22-23, Magazines for Industry, NY, the use of coloring to enhance the appearance of food. It further describes the processing of caramel. RU2143808 describes a flour vitamin-mineral enriching additive which can be used in the production of bread. DE29813793 describes a baking composition that may comprise maize starch, fibres, fructose or sacharose, salt, xanthan, and beta-1,3-glucan enriched yeast cell rest fractions.

Another problem in the case of many gluten-free bakery products, in particular in the case of bread, is that the products are completely lacking the organoleptic properties of bread that 'normal' bread has. The products are, for example, too hard, white or grey, have no taste or an odd taste and smell completely different or even unpleasant. Characteristic tastes or smells can sometimes be generated synthetically, but the problem of food hypersensitivity can then again arise. Moreover, colouring agents are not permitted in bread.

In EP 0 642 737 a gluten-free bread is described where the starting material is a gluten-free wheat flour and where it is attempted to achieve the desired organoleptic properties using egg. A disadvantage of this method is that a 100 % gluten-free wheat flour can frequently not be guaranteed and another disadvantage is that egg is used, which causes food hypersensitivity in some people.

The aim of the this invention is, therefore, to make a natural flour mixture that is suitable for the preparation of bakery products, in particular bread, that is completely free from wheat, gluten, cow's milk, soya, peanut and chicken egg constituents, etc., but that docs have the pleasant organoleptic properties. A further aim of the invention is that the bakery product based on this flour has a pleasant taste and a good texture, looks good and has a normal appearance, is not too hard and, in the case of bread, has a pleasant bread smell and also looks like'normal' bread.

Surprisingly, it has been found that a natural flour mixture according to claim 1 that is completely free from wheat, gluten, cow's milk, soya, peanut and chicken egg constituents

is able to solve the above problems.

The invention will be explained in more, detail below.

In this invention the term natural flour mixture is used to signify that the mixture contains only components that are naturally occurring and are used as such, or after isolation and/or mechanical treatment. This does not preclude it being possible that the components are factory produced, such as, for example, can be the case with xanthan gum (as gluten substitute). The components belong to the recognised constituents of food, or is the food itself, that can have a E or A number, but does not necessarily have such a number. By this means a product that is as natural as possible is obtained.

The mass percentages in the present invention all relate to the total weight of the natural flour mixture. Some components of the flour mixture contain water. In such cases the masts percentages relate to the component including the amount of water normally present, such as the amount of water that is customarily present in commercial products.

The starch in the flour mixture is completely free from gluten in order thus to provide optimum safety for people who suffer from food hypersensitivity. It thus does not contain any wheat starch. Preferably, the starch is potato starch, rice starch or maize starch or a combination thereof (for example of two or three of the starches). Preferably, it can also comprise a combination of potato starch and maize starch, the potato starch being present in an amount of approximately 55 - 75 % (m/m) and the maize starch in an amount of approximately 15 - 30 % (m/m) in the flour mixture. In another embodiment only potato starch is present. In yet another embodiment only maize starch is present, as a result of which an extra soft bakery product can be obtained. It is true that maize starch, specifically, has good characteristics in order to obtain, for example, soft bread, but for some people the presence of the finely divided maize starch leads to intestinal complaints. The total amount of starch is approximately 75 - 95 % (m/m), more preferentially 80 - 90 % (m/m).

The gluten substitute, as binder and/or leavening agent, according to the invention is a gluten substitute that contains at least one ingredient selected from xanthan gum, methylcellulose and galactomannan, and contains at least xanthan gum.

The xanthan gum is present as gluten substitute. Xanthan gum is a natural product and is known as a gluten substitute. The amount of xanthan gum is important and partially depends on the other components of the natural flour mixture. Based on the total weight of the mixture, xanthan gum must be present in an amount of 0.2 - 3 % (m/m), and more preferentially 0.5 - 2 % (m/m). In addition to xanthan gum, other binders and/or leavening agents can also be added, such as methylcellulose, guar flour and/or galactomannan (guar gum).

In a preferred embodiment the flour mixture contains both xanthan gum and methylcellulose and galactomannan. In this context care must be taken that the total amount of binders and/or leavening agents is not greater than 3 % (m/m), for example not higher than approximately 2 % (m/m). Preferably, approximately 0.5 - 2 % (m/m) xanthan gum is present in the flour mixture (the weights are all based on the weight of the total flour mixture).

In addition to xanthan gum as well as methylcellulose and galactomannan can also be present. In another embodiment the flour mixture contains xanthan gum as well as methylcellulose, and galactomannan.

If combinations of binders and/or leavening agents (gluten substitutes) are used, the total amount will depend on the binders and/or leavening agents selected since the one binder and/or leavening agent has a more powerful action (for example xanthan gum) than the other binder and/or leavening agents.

A bread based on starches and binders and/or leavening agents does not yet have all desired organoleptic properties. In the state of the art some soya is sometimes also added. A pleasant bread colour can partially be obtained by this means, but in general the taste is adversely affected by this. In addition, the presence of soya is frequently not desired. Coloured malt is sometimes also added in the state of the art, but this is based on wheat, which can give rise to the undesired introduction of gluten. Surprisingly, it has been discovered that if burnt sugar is added to the natural flour mixture a bakery product is obtained that has excellent organoleptic properties: it has an appetising taste and smell and has a natural colour after baking. In the case of bread, a brown bread is obtained with a pleasant bread smell. Bakery products with such pleasant organoleptic properties were not yet known hitherto.

Based on the total weight, burnt sugar is present in an amount of 0.02 - 5 % (m/m), more preferentially 0.05 - 3 % (m/m). It is surprising that the desired improvement can be achieved even with such small amounts as approximately 0.1 % (m/m) or less of burnt sugar, in combination with the other ingredients of the flour mixture. The burnt sugar for the flour mixture of the invention generally comprises glucose, fructose and maltodextrin.

The use of caramel to colour certain products, such as drinks, is known from the state of the art. Surprisingly, however, burnt sugar gives better results for bakery products than the use of caramel. Thus, a loaf where caramel is used for the preparation has a poorer colour and a relatively sweet taste. Such a loaf has also risen more substantially, which possibly can be ascribed to the use of caramel as food source (by the yeast). For the good organoleptic properties it is important that burnt sugar and not caramel is used. However, this does not preclude the possibility that caramel can also be used in addition to, mainly, burnt sugar. The term "burnt sugar" is known to those skilled in the art.

Caramel also differs substantially from burnt sugar. Burnt sugar is made at high temperatures, where a melting process does not necessarily have to be involved, whereas for the preparation of caramel sugar is melted and can be quenched with cream. The burnt sugar according to the invention is preferably the dry version of pure burnt sugar syrup that has been spray-dried with maltodextrin. The burnt sugar liquid used is obtained only by the physical treatment of sugar, which means heating pure sucrose and dissolution in water without any chemical additive. It therefore does not correspond to the food additive "caramel colouring". Burnt sugar powder from Felix Koch Offenbach, for example burnt sugar 75/700 and the like, which consists mainly of glucose, fructose, sucrose and maltodextrin, may be mentioned as an example of such a burnt sugar.

The natural flour mixture according to the invention will also contain (natural) flour additives, which are selected from the group comprising sodium bicarbonate, sodium pyrophosphate, salt (for example iodised cooking salt), vegetable emulsifiers, dextrose and maltose. A number of these additives are conventional additives. For these additives as well it is the case that they are, in general, known as natural products, but if they are factory produced they can be used for this invention.

Sodium bicarbonate and sodium pyrophosphate are usually ingredients of baking powder for flour and salt is a statutory requirement. The emulsifier used is preferably a vegetable emulsifier based on a mixture of polyglycerol esters and mono- and diglycerides (approximately 35 % (m/m)) dispersed on starch (approximately 65 % (m/m)). Dextrose and maltose, for example from meritose, can be added to sweeten the flour mixture. This is termed dextrose/meritose.

Preferably these constituents are added in amounts of 1 - 5 % (m/m), more preferentially 2 - 4 % (m/m) dextrose/meritose; 1 - 5 % (m/m), more preferentially 2 - 4 % (m/m), vegetable emulsifier (starting from a mixture of polyglycerol esters and mono- and diglycerides (approximately 35 % (m/m)) dispersed on starch (approximately 65 % (m/m))); 0 - 3 % (m/m) salt (for example iodised salt), for example sea salt (the amount of salt is a statutory requirement; and 0.2 - 3 % (m/m), more preferentially 0.7 - 1.5 % (m/m) sodium bicarbonate and sodium pyrophosphate (both in approximately equal amounts).

To compensate for the lack of calcium that can arise because some people have food hypersensitivity to cow's milk or other types of milk, calcium lactate is added to the natural flour mixture of the present invention. This addition is in, for example, an amount of up to 2.5 % (m/m), more preferentially up to 1.5 % (m/m) calcium lactate. Natural fibres, such as chicory fibres or beet fibres can also be added to the mixture, preferably in amounts of, respectively, 0 - 4 % (m/m), more preferentially 0 - 2 % (m/m) chicory fibres and 0 - 15 % (m/m), more preferentially 0 - 10 % (m/m), beet fibres. In the ppm range the mixture is enriched with vitamins and/or minerals, such as, for example, with approximately 0.1 - 50 ppm, more preferentially 1 - 20 ppm, riboflavin and a food grade iron salt, preferably 5 - 250 ppm iron orthophosphate, more preferentially 10 - 150 ppm.

Other ingredients that can be added are, for example, lecithin and citric acid. It is found that the organoleptic properties can also be influenced by citric acid, and lecithin can, for example, also be used as emulsifier. Lecithin can, for example, be used in an amount of approximately 1 - 5 % (m/m) of the total flour mixture, for example 0.1 - 2 % (m/m), and citric acid in an amount of at most approximately 2.5 % (m/m). (Vegetable) pectins can, for example, also be added.

The addition of a gelling agent can also have a beneficial effect on the organoleptic properties. In one embodiment the invention therefore also comprises a natural flour mixture to which a gelling agent has also been added. The gelling agent can be present, for example, in an amount of 0.2 - 4 % (m/m), for example 0.5 - 3 % (m/m). An example of a gelling agent is gelatine (Cryogel).

In a preferred embodiment the invention focuses on a natural flour mixture according to the accompanying claims having the following composition:

In a preferred embodiment the natural flour mixture according to the invention has the following composition:
(a) 75 - 95 % (m/m) potato starch, maize starch and/or rice starch
(b) 0.2 - 3 % (m/m) xanthan gum
   1 - 5 % (m/m) methylcellulose
   0 - 2 % (m/m) galactomannan
(c) 0.02 - 5 % (m/m) burnt sugar
(d) 1 - 5 % (m/m) dextrose/meritose
   1 - 5 % (m/m) vegetable emulsifier
   0 - 3 % (m/m) iodised cooking salt
(e) 0 - 2.5 % (m/m) calcium lactate
   0.2 - 3 % (m/m) sodium bicarbonate and sodium pyrophosphate (both in approximately equal amounts)
(f) 0 - 4 % (m/m) chicory fibres
   0 - 15 % (m/m) beet fibres
(g) 0 - 50 ppm riboflavin
   5 - 250 ppm food grade iron salt, preferably iron orthophosphate,
where all % (m/m) are based on the total amount of the flour.

In a more preferential embodiment the natural flour mixture according to the invention has the following composition:
(a) 80 - 90 % (m/m) potato starch, maize starch and/or rice starch
(b) 0.5 - 2 % (m/m) xanthan gum
   2 - 4 % (m/m) methylcellulose
   0 - 1 % (m/m) galactomannan
(c) 0.05 - 3 % (m/m) burnt sugar
(d) 2 - 4 % (m/m) dextrose/meritose
   2 - 4 % (m/m) vegetable emulsifier
   0 - 3 % (m/m) iodised cooking salt
(e) 0 - 1.5 % (m/m) calcium lactate
   0.7 - 1.5 % (m/m) sodium bicarbonate and sodium pyrophosphate (both in approximately equal amounts)
(f) 0 - 2 % (m/m) chicory fibres
   0 - 10 % (m/m) beet fibres
(g) 0 - 20 ppm riboflavin
   10 - 150 ppm food grade iron salt, preferably iron orthophosphate,
where all % (m/m) are based on the total amount of the flour.

Bread, gingerbread, biscuits, cake, pastries, etc. can be prepared, as is known to those skilled in the art, on the basis of the natural flour mixture of the invention. In this way a bakery product, in particular bread, is obtained that is completely free from wheat, gluten, cow's milk, soya, peanut and chicken egg constituents, etc., but that does have pleasant organoleptic properties. Other advantages are that the flour mixture is natural because it is completely based on ingredients that also occur in nature. The mixture is based solely on vegetable ingredients and is therefore also suitable for vegetarians. Because burnt sugar does not present a problem for diabetics, diabetics can also use products based on this flour mixture. Incidentally, the natural flour mixture formally does not fall under the definition of flour and therefore, for example, bread that is made on the basis of this flour mixture is also formally not bread. However, the terms flour and bakery product, etc., are used in this document because they replace these.

The bakery product based on this flour mixture has a pleasant taste, a good texture, is not too hard and in the case of bread has a pleasant bread smell and also has the appearance of 'normal' bread. The present invention also comprises the bakery product, such as, for example, bread, gingerbread, biscuits, cake and pastries.

The invention furthermore also focuses on the use of the flour mixture as well as a method for the preparation of a bakery product in which a natural flour mixture according to the invention is used, for example a method in which at least 80 % (m/m) of the natural flour mixture is used as flour.

It is clear to those skilled in the art that additional (natural) additives can also be added to the natural flour mixture of the invention, or to the bakery product derived therefrom, depending on the wishes of the user. Consideration can be given here to, for example, currants, raisins, additional vitamins (for example vitamin B2, etc.) and/or minerals (for example calcium), lecithin, citric acid, caramel, etc. It is also clear to those skilled in the art that small deviations from the cited amounts are possible without the quality of the bakery product changing. It is also clear to those skilled in the art that by changing the ratios within a composition, different bakery products with modified organoleptic properties can also be obtained.

### Examples

Examples of compositions:

### Example 1

approximately 65 % (m/m) potato starch (Potato Starch food grade quality, Avebe),
approximately 20 % (m/m) maize starch (non-modified maize starch C-2000, Cargill, 9.5 - 13 % (m/m) water),
approximately 1 % (m/m) xanthan gum (Satiaxane CX 91, Brenntag),
approximately 1.5 % (m/m) methylcellulose (Benecel M043, Hercules),
approximately 0.2 % (m/m) galactomannan (Emulcoll 200, Degussa, contains approximately 13 % (m/m) water),
approximately 0.1 % (m/m) burnt sugar (Burnt Sugar Powder 75/700, glucose, fructose, sucrose, maltodextrin, Felix Koch Offenbach),
approximately 2.5 % (m/m) dextrose/meritose (Meritose 200, Tate & Lyle, sugar spectrum: 99.5 % dextrose and 0.5 % maltose),
approximately 3 % (m/m) vegetable emulsifier (Admull Emulsponge 5306, Quest, approximately 35 % (m/m) polyglycerol esters and mono- and diglycerides dispersed on approximately 65 % (m/m) starch),
approximately 1.5 % (m/m) iodised cooking salt (dried sea salt, Jobrosal, Akzo Nobel),
approximately 0.5 % (m/m) calcium lactate (Puracel, Purac/Roland Food Specialities),
approximately 0.5 % (m/m) sodium bicarbonate (99.7 % NaHCO₃, Roland),
approximately 0.6 % (m/m) sodium pyrophosphate (acid sodium pyrophosphate: Na₂H₂P₂O₇, SAPP 28, Budenheim),
approximately 4 ppm riboflavin (vitamin B2),
approximately 50 ppm iron orthophosphate (FePO₄.xH₂O, Budenheim).

### Example 2

approximately 85 % (m/m) potato starch (Potato Starch food grade quality, Avebe),
approximately 1 % (m/m) xanthan gum (Satiaxane CX 91, Brenntag),
approximately 1.5 % (m/m) methylcellulose (Benecel M043, Hercules),
approximately 0.2 % (m/m) galactomannan (Emulcoll 200, Degussa, contains approximately 13 % (m/m) water),
approximately 0.1 % (m/m) burnt sugar (Burnt Sugar Powder 75/700, glucose, fructose, sucrose, maltodextrin, Felix Koch Offenbach),
approximately 2.5 % (m/m) dextrose/meritose (Meritose 200, Tate & Lyle, sugar spectrum: 99.5 % dextrose and 0.5 % maltose),
approximately 3 % (m/m) vegetable emulsifier (Admull Emulsponge 5306, Quest, approximately 35 % (m/m) polyglycerol esters and mono- and diglycerides dispersed on approximately 65 % (m/m) starch),
approximately 1.5 % (m/m) iodised cooking salt (dried sea salt, Jobrosal, Akzo Nobel),
approximately 0.5 % (m/m) calcium lactate (Puracel, Purac/Roland Food Specialities),
approximately 0.5 % (m/m) sodium bicarbonate (99.7 % NaHCO₃, Roland),
approximately 0.6 % (m/m) sodium pyrophosphate (acid sodium pyrophosphate: Na₂H₂P₂O₇, SAPP 28, Budenheim),
approximately 4 ppm riboflavin (vitamin B2),
approximately 50 ppm iron orthophosphate (FePO₄.xH₂O, Budenheim).

### Example 3

The same mixture as in Example 2 is used, 6 % (m/m) xanthan gum now being taken instead of 1 %.

### Example 4

The same mixture as in Example 2 is used, 0.03 % (m/m) xanthan gum now being taken instead of 1 %.

### Example 5

The same mixture as in Example 2 is used, 8 % (m/m) burnt sugar now being taken instead of 0.1 %.

### Example 6

The same mixture as in Example 2 is used, 0.005 % (m/m) burnt sugar now being taken instead of 0.1 %.

### Example 7 (comparative)

The same mixture as in Example 2 is used, caramel now being taken instead of burnt sugar.

Examples 8-10 fall outside the scope of claims.

### Example 8

A bakery product is made on the basis of a natural flour mixture consisting of maize starch, guar flour, dextrose, lecithin, salt, baking agent, citric acid and burnt sugar.

### Example 9

A bakery product is made on the basis of a natural flour mixture consisting of maize starch, guar flour, dextrose, lecithin, salt, baking agent, citric acid and burnt sugar and caramel.

### Example 10

A bakery product is made on the basis of Examples 8 and 9, but no citric acid is added.

### Example 11 (comparative)

A bakery product is made on the basis of Examples 8 - 10, but only caramel is added instead of burnt sugar (or only caramel in the case of Example 9).

### Preparation

2 % yeast, 2 % olive oil and 100 % water at about 18 °C (all based on weight) were added to the respective flour mixtures in a mixer (Hobart) with a butterfly beater. The ingredients were then mixed for approximately 1 minute and were then mixed at the maximum speed for approximately 7 minutes. The mixture was placed in weighed portions of 500 gram (half loaf) in a bread tin, in which it was allowed to rise for approximately 40 minutes. The tin was then placed in the oven at approximately 270°C, after which the oven was turned down to approximately 220°C. The total baking time was approximately 40 minutes.

Both Example 1 and Example 2 gave two white loaves with excellent organoleptic properties that correspond to those of commercially available white bread. The bread from Example 2 was tested, inter alia, for nutritional value and was found to contain approximately 393 kcal (1608 kJ), 1.4 g/100 g fat and 44.6 g/100 g digestible carbohydrates.

Example 3, in which too much xanthan gum is used, gives a loaf that is virtually impossible to bake, with a poor, somewhat chewing gum-like texture. Example 4, in which, in contrast, too little xanthan gum is used gives a compact dry loaf containing little air and with a coarse texture.

Example 5 gave a loaf that collapses with too dark a colour and a poor texture. Example 6, with relatively little burnt sugar, gives a loaf without the characteristic taste and colour.

Example 7, with caramel instead of burnt sugar, gives a loaf with a poorer colour and with a relatively sweet taste. In addition, the loaf also rises to a greater extent, which probably is to be ascribed to the use of the caramel as food source (by the yeast).

Examples 8 - 10 give loaves with good organoleptic properties. The loaves are soft. The loaves based on Example 11 are similar to those from Example 7 but have poorer organoleptic properties.

## Claims

1. Natural flour mixture, that is completely free from wheat, gluten, cow's milk, soya, peanut and chicken egg constituents, comprising:
(a) a starch that is not derived from wheat
(b) 0.2 - 3 % (m/m) xanthan gum, wherein methylcellulose and/or galactomannan is also present in addition to xanthan gum;
(c) 0.02 - 5 % (m/m) burnt sugar and
(d) natural flour additives, selected from the group comprising sodium bicarbonate, sodium pyrophosphate, salt, vegetable emulsifiers, dextrose and maltose;
(e) calcium lactate;
(f) 0-4 % (m/m) chicory fibres and/or 0-15 % (m/m) beet fibres; and
(g) riboflavin and/or a food grade iron salt.
where all % (m/m) are based on the total amount of the flour.

2. Natural flour mixture according to Claim 1, wherein the starch is potato starch, rice starch or maize starch or a combination thereof.

3. Natural flour mixture according to one of Claims 1 - 2, to which a gelling agent has also been added.

4. Natural flour mixture according to one of Claims 1 - 3, comprising the following composition:
(a) 75 - 95 % (m/m) potato starch, maize starch and/or rice starch
(b) 0.2 - 3 % (m/m) xanthan gum
1 - 5 % (m/m) methylcellulose
0 - 2 % (m/m) galactomannan
(c) 0.02 - 5 % (m/m) burnt sugar
(d) 1 - 5 % (m/m) dextrose/meritose
1 - 5 % (m/m) vegetable emulsifier
0 - 3 % (m/m) iodised cooking salt
(e) up to 2.5 % (m/m) calcium lactate
0.2 - 3 % (m/m) sodium bicarbonate and sodium pyrophosphate (both in approximately equal amounts)
(f) 0 - 4 % (m/m) chicory fibres
0 - 15 % (m/m) beet fibres
(g) 0 - 50 ppm riboflavin
5 - 250 ppm food grade iron salt,
where all % (m/m) are based on the total amount of the flour.

5. Natural flour mixture according to one of Claims 1 - 4, wherein component (a) is potato starch.

6. Natural flour mixture according to one of Claims 1 - 5, wherein component (a) is maize starch.

7. Method for the preparation of a bakery product, wherein a natural flour mixture according to one of Claims 1 - 6 is used.

8. Method according to Claim 7, wherein at least 80 % (m/m) of the natural flour mixture is used as flour.

9. Bakery product obtained on the basis of the natural flour mixture of Claims 1 - 6.

## Patentansprüche

1. Natürliche Mehlmischung, die vollständig frei von Weizen-, Gluten-, Kuhmilch-, Soja-, Erdnuss- und Hühnereibestandteilen ist, umfassend:
(a) eine Stärke, die nicht von Weizen stammt,
(b) 0,2-3% (M/M) Xanthan, wobei auch Methylcellulose und/oder Galactomannan zusätzlich zu Xanthan vorhanden sind;
(c) 0,02 - 5% (M/M) gebrannter Zucker und
(d) natürliche Mehlzusatzstoffe, ausgewählt aus der Gruppe umfassend Natriumbicarbonat, Natriumpyrophosphat, Salz, pflanzliche Emulgatoren, Dextrose und Maltose;
(e) Calciumlactat;
(f) 0-4% (M/M) Chicoréefasern und/oder 0-15% (M/M) Zuckerrübenfasern; und
(g) Riboflavin und/oder ein Eisensalz in Nahrungsmittelqualität;
wobei alle %-Angaben (M/M) auf der Gesamtmenge an Mehl basieren.

2. Natürliche Mehlmischung nach Anspruch 1, wobei die Stärke Kartoffelstärke, Reisstärke oder Maisstärke oder eine Kombination davon ist.

3. Natürliche Mehlmischung nach einem der Ansprüche 1 bis 2, der auch ein Geliermittel zugefügt wurde.

4. Natürliche Mehlmischung nach einem der Ansprüche 1 bis 3, umfassend die folgende Zusammensetzung:
(a) 75 - 95% (M/M) Kartoffelstärke, Maisstärke und/oder Reisstärke
(b) 0,2 - 3% (M/M) Xanthan
1 - 5% (M/M) Methylcellulose
0 - 2% (M/M) Galactomannan
(c) 0,02 - 5% (M/M) gebrannter Zucker
(d) 1 - 5% (M/M) Dextrose/Meritose
1 - 5% (M/M) pflanzlicher Emulgator
0 - 3% (M/M) iodiertes Speisesalz
(e) bis zu 2,5% (M/M) Calciumlactat
0,2 - 3% (M/M) Natriumcarbonat und Natriumpyrophosphat (beide in annähernd gleichen Mengen)
(f) 0 - 4% (M/M) Chicoréefasern
0-15% (M/M) Zuckerrübenfasern
(g) 0 - 50 ppm Riboflavin
5 - 250% ppm Eisensalz in Nahrungsmittelqualität,
wobei alle %-Angaben (M/M) auf der Gesamtmenge an Mehl basieren.

5. Natürliche Mehlmischung nach einem der Ansprüche 1 bis 4, wobei der Bestandteil (a) Kartoffelstärke ist.

6. Natürliche Mehlmischung nach einem der Ansprüche 1 bis 5, wobei der Bestandteil (a) Maisstärke ist.

7. Verfahren zur Herstellung einer Backware, wobei eine natürliche Mehlmischung nach einem der Ansprüche 1 bis 6 verwendet wird.

8. Verfahren nach Anspruch 7, wobei mindestens 80% (M/M) der natürlichen Mehlmischung als Mehl verwendet wird.

9. Backware, die auf der Grundlage der natürlichen Mehlmischung nach den Ansprüchen 1 bis 6 erhalten wird.

## Revendications

1. Mélange de farine naturelle, qui est complètement exempt de blé, de gluten, de lait de vache, de soja, d'arachide et de constituants à base d'oeuf de poule, comprenant :
(a) un amidon qui n'est pas dérivé du blé ;
(b) 0,2 à 3 % (m/m) de gomme de xanthane, où de la méthylcellulose et/ou du galactomannane sont également présents en plus de la gomme de xanthane ;
(c) 0,02 à 5 % (m/m) de sucre brûlé ;
(d) des additifs de farine naturelle, choisis dans le groupe comprenant le bicarbonate de sodium, le pyrophosphate de sodium, un sel, des émulsifiants végétaux, le dextrose et le maltose ;
(e) du lactate de calcium ;
(f) 0 à 4 % (m/m) de fibres de chicorée et/ou 0 à 15 % (m/m) de fibres de betterave ; et
(g) de la riboflavine et/ou un sel de fer de qualité alimentaire,
où le % total (m/m) est basé sur la quantité totale de la farine.

2. Mélange de farine naturelle selon la revendication 1, dans lequel l'amidon est l'amidon de pomme de terre, l'amidon de riz ou l'amidon de maïs ou une combinaison de ceux-ci.

3. Mélange de farine naturelle selon l'une des revendications 1 à 2, auquel un agent gélifiant a également été ajouté.

4. Mélange de farine naturelle selon l'une des revendications 1 à 3, comprenant la composition suivante :
(a) 75 à 95 % (m/m) d'amidon de pomme de terre, d'amidon de maïs et/ou d'amidon de riz
(b) 0,2 à 3 % (m/m) de gomme de xanthane
1 à 5 % (m/m) de méthylcellulose
0 à 2 % (m/m) de galactomannane
(c) 0,02 à 5 % (m/m) de sucre brûlé
(d) 1 à 5 % (m/m) de dextrose/méritose
1 à 5 % (m/m) d'émulsifiant végétal
0 à 3 % (m/m) de sel de cuisine iodé
(e) jusqu'à 2,5 % (m/m) de lactate de calcium
0,2 à 3 % (m/m) de bicarbonate de sodium et de pyrophosphate de sodium (les deux en des quantités approximativement égales)
(f) 0 à 4 % (m/m) de fibres de chicorée
0 à 15 % (m/m) de fibres de betterave
(g) 0 à 50 ppm de riboflavine
5 à 250 ppm de sel de fer de qualité alimentaire,
où le % total (m/m) est basé sur la quantité totale de la farine.

5. Mélange de farine naturelle selon l'une des revendications 1 à 4, dans lequel le composant (a) est l'amidon de pomme de terre.

6. Mélange de farine naturelle selon l'une des revendications 1 à 5, dans lequel le composant (a) est l'amidon de maïs.

7. Procédé de préparation d'un produit de boulangerie, dans lequel un mélange de farine naturelle selon l'une des revendications 1 à 6 est utilisé.

8. Procédé selon la revendication 7, dans lequel au moins 80 % (m/m) du mélange de farine naturelle est utilisé comme farine.

9. Produit de boulangerie obtenu sur la base du mélange de farine naturelle selon les revendications 1 à 6.
